# EUROPÄISCHE PATENTSCHRIFT

(11) **EP 0 717 687 B1**
(45) Veröffentlichungstag und Bekanntmachung des Hinweises auf die Patenterteilung: **04.11.1998**
(21) Anmeldenummer: 95943148.7
(22) Anmeldetag: 07.07.1995
(51) Int. Cl.: B60R 22/405

(54) **GURTAUFROLLER**
BELT RETRACTOR
ENROULEUR DE CEINTURE DE SECURITE

(30) Priorität: 07.07.1994 DE 4423958
(43) Veröffentlichungstag der Anmeldung: 26.06.1996
(73) Patentinhaber: TRW Occupant Restraint Systems GmbH & Co. KG, 73551 Alfdorf (DE)
(72) Erfinder: HIRZEL, Uwe, D-71549 Auenwald (DE)
(74) Vertreter: Degwert, Hartmut, Dipl.-Phys.
(86) Internationale Anmeldenummer: EP9502657
(87) Internationale Veröffentlichungsnummer: WO9601751

(56) Entgegenhaltungen:
- EP-A- 0 273 584
- EP-A- 0 310 786
- EP-A- 0 359 960
- DE-A- 3 933 453
- GB-A- 2 162 046

## Beschreibung

Die Erfindung betrifft einen Gurtaufroller für ein Insassen-Rückhaltesystem in Fahrzeugen, mit einer drehbar in einem Rahmen gelagerten Gurtspule, an der eine Aufrollfeder angreift, einem Blockiermechanismus für die Gurtspule, der durch Verschwenken mindestens einer Ansteuerklinke aktivierbar ist, und an der Gurtspule gelagerten, relativ zu dieser verdrehbaren Sperrelementen, wobei die Sperrelemente und die Ansteuerklinke relativ zueinander durch Drehung der Gurtspule in der Aufwickelrichtung eine erste Stellung, in der die Sperrelemente über ein Sperrteil an der Ansteuerklinke angreifen und deren Verschwenken verhindern, und durch Drehung in der Abwickelrichtung eine zweite Stellung einnehmen können, in der die Sperrelemente die Ansteuerklinke freigeben, bei welchem für den Übergang aus der ersten in die zweite Stellung eine Drehung der Gurtspule um einen vorbestimmten Drehwinkel von mindestens etwa 10° notwendig ist.

Ein gattungsgemäßer Gurtaufroller gemäß dem Oberbegriff des Anspruchs 1 ist in der britischen Offenlegungsschrift GB 2 162 046 A beschrieben. Dort kann der Blockiermechanismus für die Gurtspule lediglich fahrzeugsensitiv ausgelöst werden, indem die Ansteuerklinke eines Kugel-Trägheitssensors verschwenkt wird. Um ein unbeabsichtigtes Blockieren der Gurtspule zu vermeiden, ist ein drehbar an der Gurtspule gelagerter Sperrhebel vorgesehen, der in einer ersten Stellung an der Ansteuerklinke angreift und deren Verschwenken verhindert. Durch Drehung der Gurtspule in Abwickelrichtung kann der Sperrhebel eine zweite Stellung einnehmen, in der er die Ansteuerklinke freigibt. Für den Übergang aus der ersten in die zweite Stellung ist eine Drehung der Gurtspule um einen vorbestimmten Drehwinkel von etwa 35° notwendig.

Mit den dort beschriebenen Maßnahmen kann eine unbeabsichtigte Blockierung der Gurtspule nur dann verhindert werden, wenn sie fahrzeugsensitiv ausgelöst ist, beispielsweise wenn das Ende des Aufrollvorgangs mit einer Erschütterung des Gurtaufrollers zusammenfällt, sei es beim Zurückklappen einer Rücksitzbank, falls der Gurtaufroller im Bereich der Heckablage eines Fahrzeugs angebracht ist. Indessen können die dort vorgeschlagenen Maßnahmen keine unbeabsichtigte Blockierung einer Gurtspule mit gurtbandsensitiver Aktivierung des Blockierungsmechanismus verhindern. Wenn der Aufrollvorgang abrupt beendet wird, beispielsweise durch Anstoßen der Steckzunge des Sicherheitsgurtes an einem Hindernis oder dem Umlenkbeschlag, wird aufgrund der starken Verzögerung der Gurtspule gurtbandsensitiv eine Blockierung der Gurtspule ausgelöst, wodurch ein nachfolgendes Abziehen von Gurtband verhindert ist.

Es sind bereits verschiedene Maßnahmen vorgeschlagen worden, um eine solche unerwünschte Blockierung zu vermeiden. Diese Maßnahmen sind jedoch mit relativ hohem Aufwand bei der Fertigung und Montage verbunden; dennoch wird im Falle einer besonders abrupten Beendigung der Aufrollbewegung der Gurtspule oder im Falle einer starken Erschütterung des Gurtaufrollers deren Blockierung nicht zuverlässig verhindert.

Durch die Erfindung wird ein Gurtaufroller zur Verfügung gestellt, bei dem eine solche unerwünschte Blockierung mit einfachen Mitteln, einer geringen Anzahl von zusätzlichen Bauteilen und ohne Justierung nach der Montage verhindert wird. Bei dem erfindungsgemäßen Gurtaufroller ist für den Übergang aus der ersten in die zweite Stellung eine Drehung der Gurtspule um einen vorbestimmten Drehwinkel von mindestens etwa 10° notwendig. Dies gewährleistet, daß auch bei einer abrupten Beendigung der Aufrollbewegung des Gurtbandes oder bei starken Erschütterungen des Gurtaufrollers eine unbeabsichtigte Blockierung der Gurtspule sicher verhindert ist. Die Verhinderung der Blockierung der Gurtspule über den vorbestimmten Drehwinkel ist ohne Einfluß auf die ordnungsgemäße Arbeitsweise des Gurtaufrollers, da auch bei einem optimal eingestellten Gurtaufroller zum gurtband- oder fahrzeugsensitiven Auslösen des Blockierens der Gurtspule diese eine gewisse Drehung ausführen muß.

Gemäß einem ersten Vorschlag der Erfindung ist vorgesehen, daß der Blockiermechanismus für die Gurtspule fahrzeug- und/oder gurtbandsensitiv aktivierbar ist, daß die Ansteuerklinke an einer Seite der Gurtspule schwenkbar gelagert ist und in eine Innenverzahnung eines drehbar am Rahmen gelagerten Aktivierungsringes eingesteuert werden kann mittels eines Steuernockens, der an einer Steuerscheibe ausgebildet ist, die begrenzt drehbar an der Gurtspule gelagert ist, daß die Ansteuerklinke einen Ansatz aufweist und daß die Sperrelemente eine an der Gurtspule drehbar gelagerte Hemmscheibe enthalten, die durch Reibung gegenüber dem Rahmen gebremst wird und das Sperrteil aufweist, welches in der ersten Stellung an dem Ansatz angreift und in der zweiten Stellung diesen freigibt. Die zusätzlich zu einem herkömmlichen Gurtaufroller erforderlichen Bauteile, nämlich Hemmscheibe und Reibelement, können leicht in vorhandene Konstruktionen integriert werden und verursachen kaum zusätzliche Kosten. Da für die Abbremsung der Hemmscheibe nur eine sehr geringe Reibkraft erforderlich ist, wird die Gurtspulendrehung kaum behindert, so daß der Einfluß auf die Aus- und Rückzugskraft vernachlässigbar ist.

Vorzugsweise ist vorgesehen, daß der vorbestimmte Drehwinkel zwischen etwa 20° und etwa 25° beträgt.

Gemäß einem zweiten Vorschlag der Erfindung ist vorgesehen, daß die Ansteuerklinke schwenkbar an einem Trägheitssensor gelagert ist und fahrzeugsensitiv in eine Außenverzahnung einer Steuerscheibe eingesteuert werden kann, daß die Sperrelemente einen reibschlüssig mit der Gurtspule gekoppelten und um deren Achse begrenzt verschwenkbar gelagerten Sperrhebel enthalten, der mit zwei kreisbogenförmigen Armen den Umfang eines kreisscheibenformigen, drehfest an der Gurtspule gelagerten Lagerteils umgreift, daß die Arme durch eine sie umspannende metallische Ringfeder in Reibungseingriff mit der Umfangsfläche des Lagerteils gehalten sind und daß der Sperrhebel mit einer kreisbogenförmigen Anlagefläche versehen ist, die sich über einen Bereich erstreckt, der dem Drehwinkel entspricht, und die in der ersten Stellung an der Ansteuerklinke angreift und in der zweiten Stellung diese freigibt.

Gemäß einer bevorzugten Weiterbildung des ersten Vorschlags der Erfindung kann vorgesehen sein, daß die Sperrelemente ferner einen reibschlüssig mit der Gurtspule gekoppelten und um deren Achse begrenzt verschwenkbar gelagerten Sperrhebel enthalten, der mit einer kreisbogenförmigen Anlagefläche versehen ist, die sich über einen Bereich erstreckt, der dem Drehwinkel entspricht, und die in der ersten Stellung an einer Ansteuerklinke eines Trägheitssensors angreift und in der zweiten Stellung diese freigibt. Ein solcher Gurtaufroller gewährleistet beim Aufwickeln von Gurtband, daß weder die Ansteuerklinke des Blockiermechanismus noch die Trägheitssensor-Ansteuerklinke in Eingriff in die ihnen zugeordneten Verzahnungen verschwenkt werden können. Wenn nur auf die Ansteuerklinke des Blockiermechanismus eingewirkt und deren Verschwenken verhindert wird, kann es bei starken Erschütterungen des Gurtaufrollers noch zu einem Eingriff der Trägheitssensor-Ansteuerklinke in die Außenverzahnung des Steuerrades kommen, wodurch das Abwickeln von Gurtband von der Gurtspule verhindert wird. Für ein zuverlässiges Vermeiden einer unerwünschten Blockierung der Gurtspule muß das Verschwenken sowohl der Ansteuerklinke des Blockiermechanismus als auch der Trägheitssensor-Ansteuerklinke verhindert werden.

Weitere Merkmale und Vorteile der Erfindung ergeben sich aus der folgenden Beschreibung und aus der Zeichnung, auf die Bezug genommen wird. In der Zeichnung zeigen:
- Fig. 1 einen axialen Teilschnitt eines Gurtaufrollers gemäß einer ersten Ausführungsform;
- Fig. 2 eine schematische Seitenansicht des Gurtaufrollers von Fig. 1 im Zustand der Abwicklung;
- Fig. 3 eine entsprechende Seitenansicht bei eingesteuerter Ansteuerklinke;
- Fig. 4 eine entsprechende Seitenansicht bei Drehung der Gurtspule von Fig. 1 in Aufwickelrichtung;
- Fig. 5 einen axialen Teilschnitt eines Gurtaufrollers gemäß einer weiteren Ausführungsform;
- Fig. 6 eine schematische Seitenansicht des Gurtaufrollers von Fig. 5 mit gesperrten Ansteuerklinken;
- Fig. 7 eine schematische Seitenansicht des Gurtaufrollers von Fig. 5 in einem Übergangszustand; und
- Fig. 8 eine schematische Seitenansicht des Gurtaufrollers von Fig. 5 mit freigegebenen Ansteuerklinken.

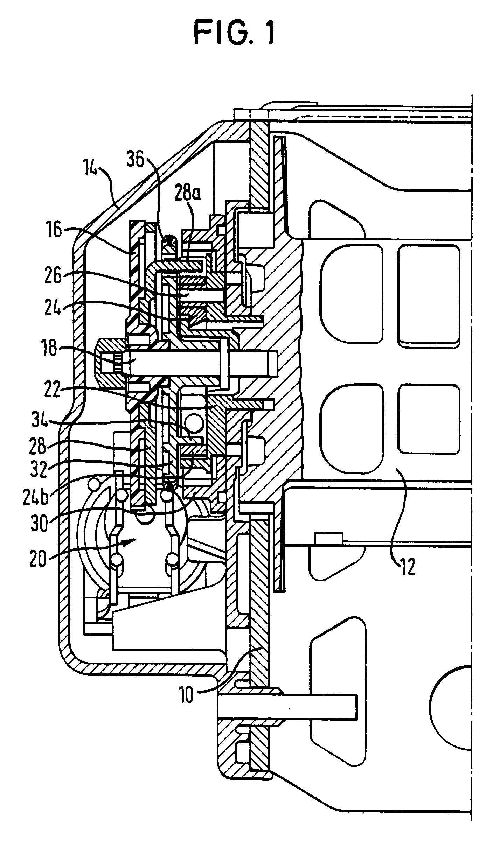

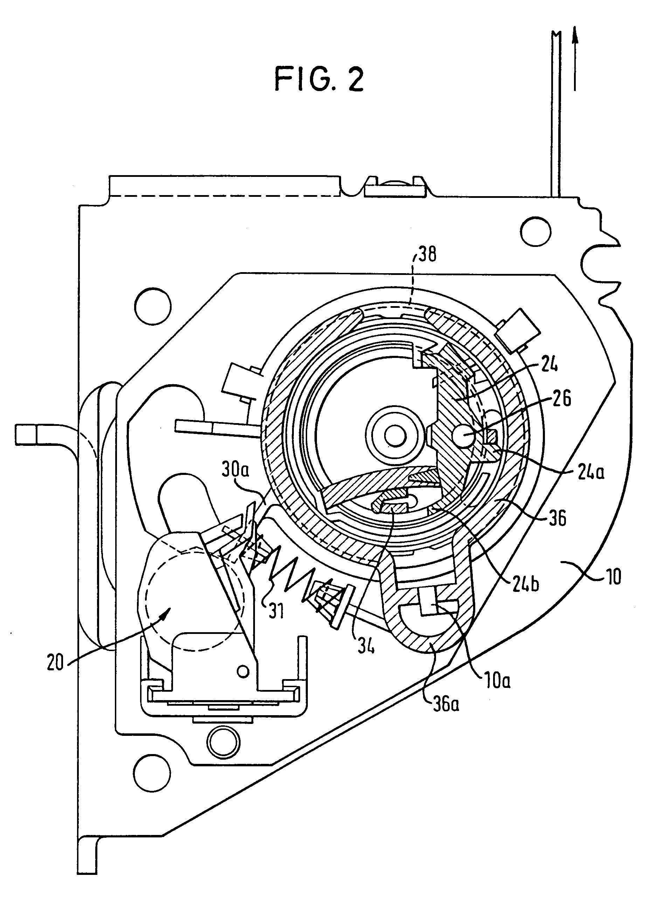

In den Figuren 1 bis 4 ist ein erfindungsgemäßer Gurtaufroller gemäß einer ersten Ausführungsform dargestellt. Bei diesem ist in einem lasttragenden Rahmen 10 eine Gurtspule 12 drehbar gelagert. Innerhalb einer auf die Seite des Rahmens 10 aufgesetzten Schutzkappe 14 ist ein fahrzeug- und gurtbandsensitiver Ansteuermechanismus für das (nicht gezeigte) Sperrsystem des Gurtaufrollers untergebracht. Auf der gegenüberliegenden Seite des Gurtaufrollers ist eine (nicht gezeigte) Aufrollfeder in üblicher Weise angeordnet.

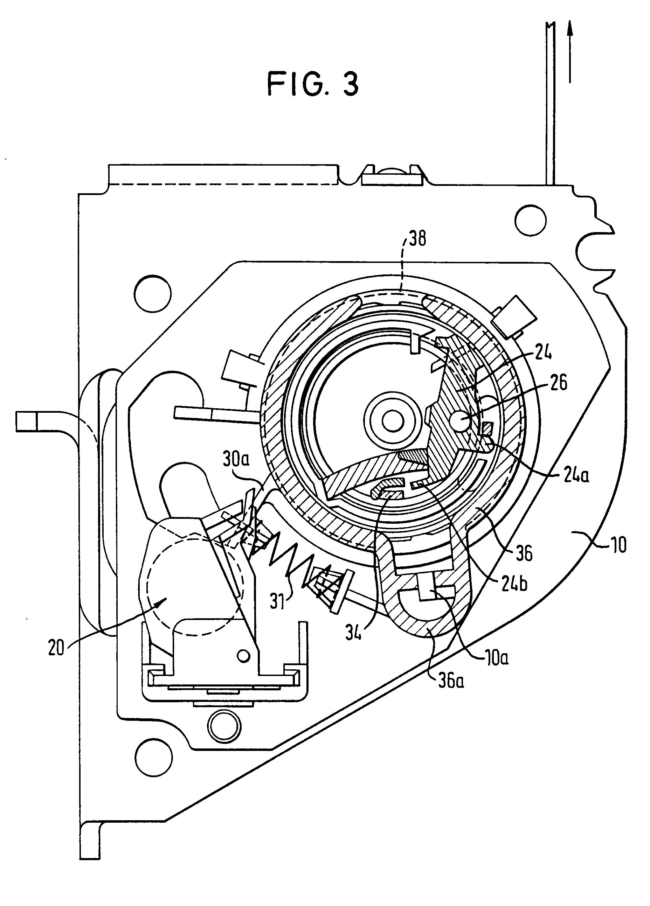

Der Ansteuermechanismus umfaßt eine außenverzahnte Steuerscheibe 16, die mittels eines Lagerstiftes 18 drehbar an der Gurtspule 12 gelagert ist. Mit der Außenverzahnung der Steuerscheibe 16 wirkt ein Trägheitssensor 20 zusammen, der in bekannter Weise aus einer Massekugel und einer schwenkbar gelagerten, durch die Massekugel in die Außenverzahnung der Steuerscheibe 16 einsteuerbare Trägheitssensor-Ansteuerklinke 20a gebildet ist. An einer drehfest mit der Gurtspule 12 verbundenen Lagerplatte 22 ist eine Ansteuerklinke 24 mittels eines Lagerstiftes 26 schwenkbar gelagert. An die aus Kunststoff gebildete Steuerscheibe 16 ist zur Erhöhung ihrer Massenträgheit eine Trägheitsscheibe 28 aus einem metallischen Werkstoff drehfest angekoppelt. Diese Trägheitsscheibe 28 ist mit einem Steuernocken 28a versehen, der mit der Ansteuerklinke 24 zusammenwirkt und bei einer Relativdrehung zwischen Gurtspule und Steuerscheibe 16 gegen einen radialen Fortsatz 24a der Ansteuerklinke 24 drückt, wodurch diese mit ihrer Klinkenspitze auswärts verschwenkt wird, wie in Fig. 3 dargestellt ist. In diesem Zustand greift sie in eine Innenverzahnung eines Aktivierungsringes 30 ein, der die Lagerplatte 22 umgibt und drehbar am Rahmen 10 gelagert ist. Der Aktivierungsring 30 ist mit einem radialen Arm 30a versehen, der durch eine Druckfeder 31 am Rahmen 10 abgestützt ist. Durch Drehung des Aktivierungsringes 30 wird die Sperrklinke des (nicht gezeigten) Sperrsystems in bekannter Weise eingesteuert.

Mittels des Lagerstiftes 18 ist ferner eine Hemmscheibe 32 drehbar an der Seite der Gurtspule 12 gelagert. Die Hemmscheibe 32 ist mit einem senkrecht in Richtung auf die Lagerplatte 22 zu gerichteten Sperrelement 34 versehen, welches durch einen schmalen Wandungsteil gebildet ist, der sich bogenförmig am Außenumfang der Hemmscheibe 32 über einen Winkel von einigen Grad erstreckt. Den Außenumfang der Hemmscheibe 32 umgreift ein Reibring 36, in dessen Außenumfang eine Nut gebildet ist. In dieser Nut ist ein Federring 38 aufgenommen, der den Reibring 36 mit mäßiger Spannung gegen den Außenumfang der Hemmscheibe 32 drückt. Der Reibring 36 ist mit einem bügelförmigen Halteteil 36a versehen, welches an einer seitlich abstehenden Fahne 10a des Rahmens 10 gehalten wird, so daß der Reibring 36 drehfest gehalten ist und durch den Reibeingriff mit der Hemmscheibe 32 deren Drehung bremst. Diese Bremswirkung ist allerdings so gering bemessen, daß die Auf- und Abrollkräfte an der Gurtspule 12 nicht merklich beeinflußt werden.

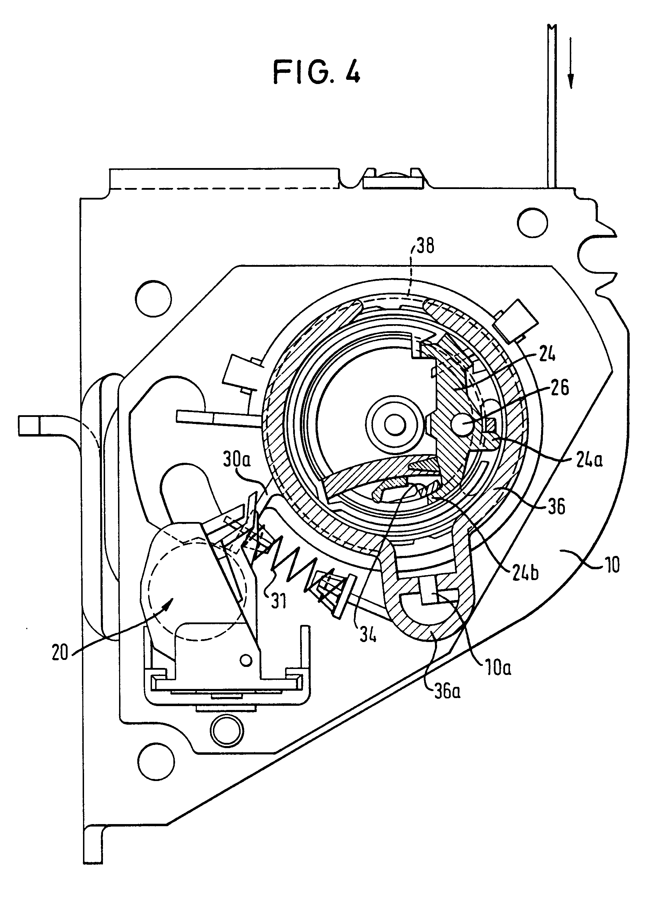

Die Ansteuerklinke 24 weist an ihrem von der Klinkenspitze abgewandten Ende einen länglichen Ansatz 24b auf, der schwach bogenförmig gekrümmt ist. Wenn die Gurtspule in Aufwickelrichtung gedreht wird, wie in Fig. 4 gezeigt, bewegt sich der Ansatz 24b zunächst in Richtung auf das Sperrteil 34 zu und wird dann radial außerhalb von ihm daran vorbeibewegt, bis das Sperrteil 34 an der Ansteuerklinke 24 anstößt. Anschließend wird die Hemmscheibe 32, die aufgrund der durch den Reibring 36 ausgeübten Reibung bis zu diesem Zeitpunkt in Ruhe verbleibt, mitgedreht und dreht sich mit der Gurtspule bis zu einer Umkehrung der Drehrichtung. Wenn diese Drehrichtungsumkehr stattfindet, löst sich das Sperrteil 34 von der Ansteuerklinke 24, und die Hemmscheibe 32 wird erneut durch Reibung angehalten. Solange aber das Sperrteil 34 den Ansatz 24b hintergreift, also über den vorbestimmtne Drehwinkel, welcher der Erstreckung des Ansatzes 24b in Umfangsrichtung entspricht, ist die Ansteuerklinke 24 an einer Schwenkbewegung in Eingriff mit der Innenverzahnung des Aktivierungsringes 30 gehindert, da der Ansatz 24b am Sperrteil 34 anstößt. Erst wenn nach dieser Drehung in Abwickelrichtung um den vorbestimmten Drehwinkel das Sperrteil 34 den Ansatz 24b freigibt, kann die Ansteuerklinke 24 fahrzeug- oder gurtbandsensitiv über den Steuernocken 28a verschwenkt werden und mit der Innenverzahnung des Aktivierungsringes 30 in Eingriff kommen, wie in Fig. 3 dargestellt ist. Der vorbestimmte Drehwinkel, der von der Gurtspule durchlaufen werden muß, damit die Ansteuerklinke 24 nach einer Sperrung wieder freigegeben wird, beträgt mindestens etwa 10°, vorzugsweise zwischen etwa 20° und etwa 25°.

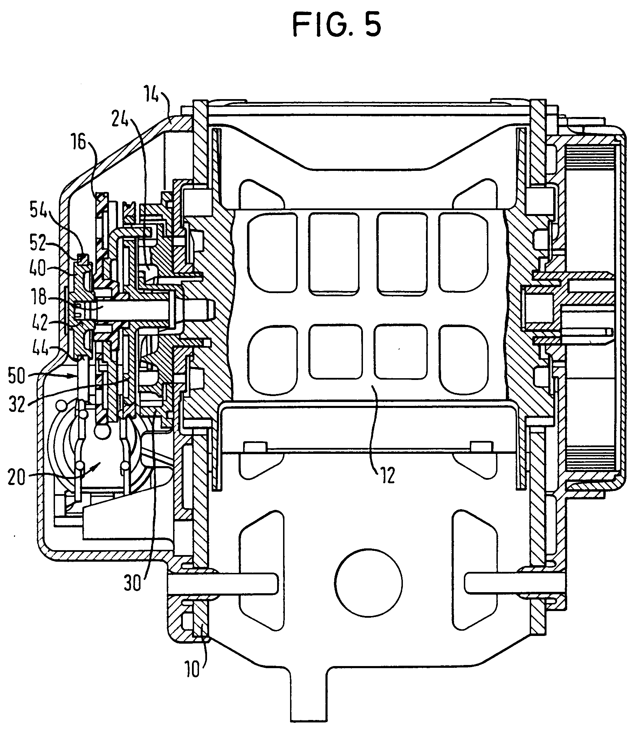

Gemäß einer bevorzugten, in den Figuren 5 bis 8 dargestellen Weiterbildung der vorangegangenen Ausführungsform ist zusätzlich zu einer Sperrung der Ansteuerklinke 24 des Blockiermechanismus beim Aufwickeln des Gurtbandes eine Sperrung der Ansteuerklinke 20a des fahrzeugsensitiv ansprechenden Trägheitssensors 20 vorgesehen. Es werden nur die neu hinzugekommenen Bauteile und deren Funktion beschrieben; die übrigen Bauteile stimmen mit der vorangegangenen Ausführungsform überein.

Drehfest an den Lagerstift 18 der Gurtspule angeschlossen ist ein nabenförmiges Lagerteil 40, indem in dessen konzentrische Bohrung 42 das Ende des Lagerstiftes 18 eingepreßt ist. Das Lagerteil 40 ist an seinem Außenumfang mit einer umlaufenden Nut 44 versehen, in der zwei kreisbogenförmige Arme 46, 48 eines allgemein mit 50 bezeichneten Sperrhebels gehalten sind. Diese kreisbogenförmigen Arme 46, 48 weisen ihrerseits an ihrem Außenumfang eine Nut 52 auf, in die eine Ringfeder 54 diese kreisbogenförmigen Arme 46, 48 umschließend eingreift. Der Sperrhebel 50 ist mit zwei radialen Armen 56, 58 versehen, die in Umfangsrichtung voneinander beabstandet sind. An ihrem zu dem Lagerstift 18 entgegengesetzten Ende sind die radialen Arme 56, 58 durch einen sich in Umfangsrichtung erstreckenden Steg 60 miteinander verbunden, der an der radial außenliegenden Seite eine Anlagefläche 62 aufweist und an dem zu dem Arm 56 entgegengesetzten Ende durch einen Vorsprung 64 verlängert ist, der an der Fahne 10a in Anlage gelangen kann. Die Anlagefläche 62 ist in einem solchen Abstand von dem Lagerstift 18 angeordnet, daß sie an der Trägheitssensor-Ansteuerklinke 20a in Anlage gelangen kann. An einem Ende der Anlagefläche 62 ist ein Ansatz 66 ausgebildet.

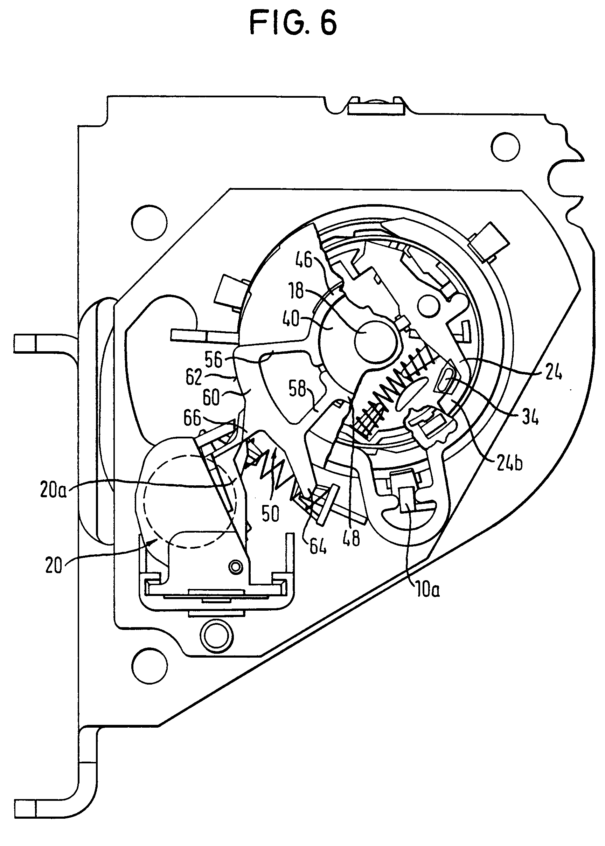

In Fig. 6 ist der Sperrhebel 50 in der ersten Stellung beim Aufwickeln des Gurtbande dargestellt. Durch den Reibungseingriff der kreisbogenförmigen Arme 46, 48 an dem Lagerteil 40 wird bei einer Drehung der Gurtspule 12 der Sperrhebel 50 bezüglich Fig. 6 im Uhrzeigersinn gedreht, bis der Ansatz 66 des Steges 60 an der Klinkenspitze der Trägheitssensor-Ansteuerklinke 20a anliegt. In dieser Stellung ist ein Verschwenken der Trägheitssensor-Ansteuerklinke 20a in Eingriff mit der Außenverzahnung des Steuerscheibe 16 verhindert. Gleichzeitig ist ein Verschwenken des Ansteuerhebels 24 verhindert, da das Sperrteil 34 an dem Ansatz 24b angreift.

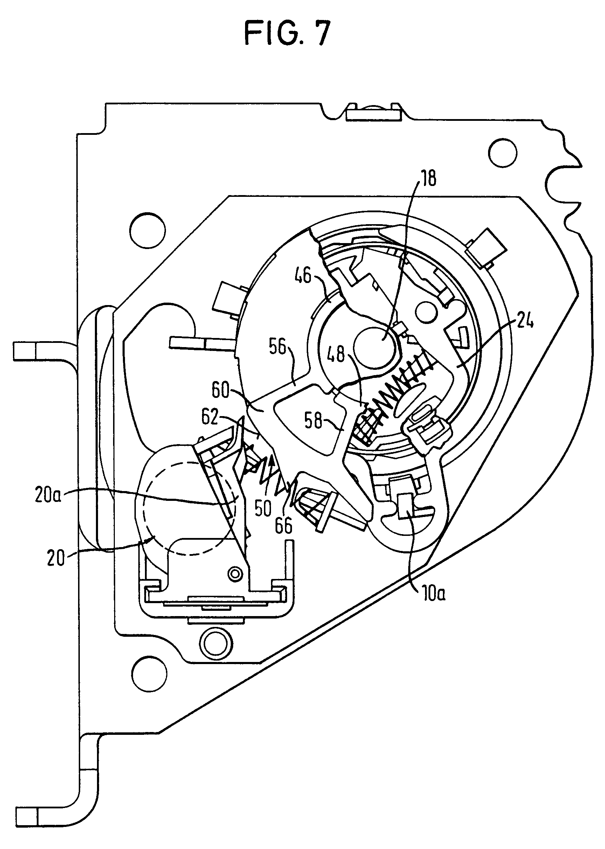

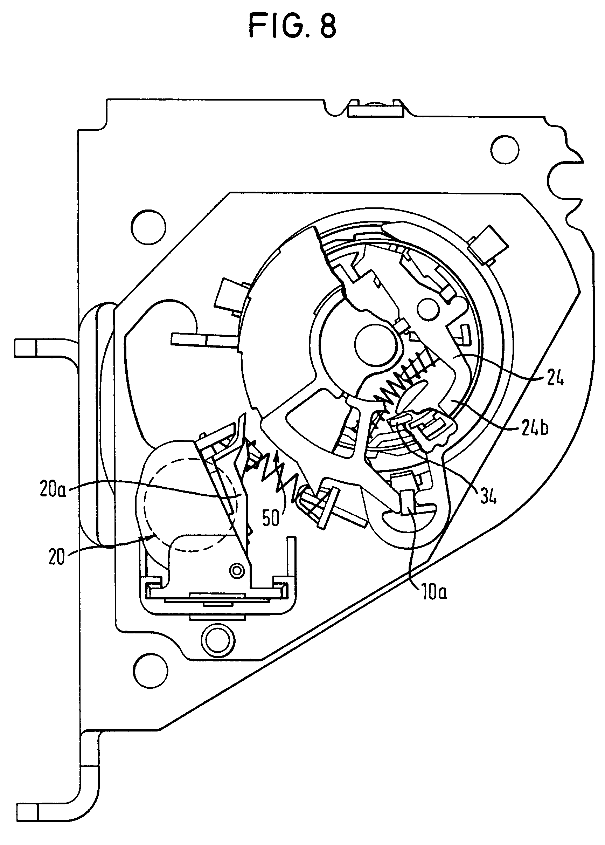

In Fig. 7 ist ein Übergangszustand des Sperrhebels 50 dargestellt. Dieser Zustand tritt nach einer Umkehr der Drehrichtung der Gurtspule 12 von der Aufwickelrichtung in die Abwickelrichtung auf und entspricht einer Drehung der Gurtspule 12 um den vorbestimmten Drehwinkel in der Abwickelrichtung. Die Trägheitssensor-Ansteuerklinke ist gerade noch durch die Anlagefläche 62 gesperrt, die sich entlang dem vorbestimmten Drehwinkel erstreckt, der auch bei dieser Ausführungsform vorzugsweise zwischen etwa 20° und etwa 25° beträgt. Wird die Gurtspule 12 weiter in der Abwickelrichtung gedreht, wird der Sperrhebel 50 ausgehend von der dargestellten Stellung weiter entgegen dem Uhrzeigersinn verschwenkt, bis die zweite Stellung erreicht ist, in welcher der Vorsprung 64 an der Fahne 10a anliegt und die Trägheitssensor-Ansteuerklinke 20a freigegeben ist. Dies ist in Fig. 8 dargestellt. Es ist auch zu sehen, daß das Sperrteil 34 den Ansatz 24b der Ansteuerklinke 24 freigegeben hat.

Der gesamte Sperrhebel 50 mit den kreisbogenförmigen Armen 46, 48, den radialen Armen 56, 58 und dem Steg 60 bildet ein einziges Kunststoffteil. Jeder der kreisbogenförmigen Arme 46, 48 erstreckt sich vorzugsweise über etwas weniger als 180°, so daß also zwischen beiden Enden dieser kreisbogenförmigen Arme ein Spalt verbleibt, der verhindert, daß die Arme 46, 48 sich unmittelbar aneinander abstützen. Die Anlagekraft der kreisbogenförmigen Arme 46, 48 an dem Lagerteil 40 wird so überwiegend durch die Dimensionierung der Ringfeder 54 bestimmt, und es ergibt sich eine Reibkraft bei einer Verdrehung des Sperrhebels 50 gegenüber der Gurtspule 12, welche die Aufroll- und Abrollkräfte für das Gurtband nur unmerklich beeinflußt.

## Patentansprüche

1. Gurtaufroller für ein Insassen-Rückhaltesystem in Fahrzeugen, mit einer drehbar in einem Rahmen (10) gelagerten Gurtspule (12), an der eine Aufrollfeder angreift, einem Blockiermechanismus für die Gurtspule, der durch Verschwenken mindestens einer Ansteuerklinke (20a; 24) aktivierbar ist, und an der Gurtspule (12) gelagerten, relativ zu dieser verdrehbaren Sperrelementen (32, 34; 50, 62), wobei die Sperrelemente (32, 34; 50, 62) und die Ansteuerklinke (20a; 24) relativ zueinander durch Drehung der Gurtspule (12) in der Aufwickelrichtung eine erste Stellung, in der die Sperrelemente (32, 34; 50, 62) über ein Sperrteil (34; 62) an der Ansteuerklinke (20a; 24) angreifen und deren Verschwenken verhindern, und durch Drehung in der Abwickelrichtung eine zweite Stellung einnehmen können, in der die Sperrelemente (32, 34; 50, 62) die Ansteuerklinke (20a; 24) freigeben, bei welchem für den Übergang aus der ersten in die zweite Stellung eine Drehung der Gurtspule (12) um einen vorbestimmten Drehwinkel von mindestens etwa 10° notwendig ist,
dadurch gekennzeichnet,
daß der Blockiermechanismus der Gurtspule fahrzeug- und/oder gurtbandsensitiv aktivierbar ist, daß die Ansteuerklinke (24) an einer Seite der Gurtspule (12) schwenkbar gelagert ist und in eine Innenverzahnung eines drehbar am Rahmen (10) gelagerten Aktivierungsringes (30) eingesteuert werden kann mittels eines Steuernockens (28a), der an einer Steuerscheibe (16) ausgebildet ist, die begrenzt drehbar an der Gurtspule (12) gelagert ist, daß die Ansteuerklinke (24) einen Ansatz (24b) aufweist und daß die Sperrelemente eine an der Gurtspule (12) drehbar gelagerte Hemmscheibe (32) enthalten, die durch Reibung gegenüber dem Rahmen (10) gebremst wird und das Sperrteil (34) aufweist, welches in der ersten Stellung an dem Ansatz (24b) angreift und in der zweiten Stellung diesen freigibt.

2. Gurtaufroller nach Anspruch 1, dadurch gekennzeichnet, daß der vorbestimmte Drehwinkel zwischen etwa 20° und etwa 25° beträgt.

3. Gurtaufroller nach Anspruch 1 oder Anspruch 2, dadurch gekennzeichnet, daß die Hemmscheibe (32) durch Anstoßen der Ansteuerklinke (24) an dem Sperrteil (34) bei Drehung der Gurtspule (12) gegen eine Reibkraft relativ zum Rahmen (10) mitdrehbar ist, wobei diese Reibkraft gegenüber der Kraft der Aufrollfeder vernachlässigbar klein ist.

4. Gurtaufroller nach einem der Ansprüche 1 bis 3, dadurch gekennzeichnet, daß das Sperrteil (34) durch ein senkrecht von der Hemmscheibe (32) abstehendes Wandungteil gebildet ist und der Ansatz (24b) der Ansteuerklinke bei Drehung der Gurtspule (12) in Aufwickelrichtung radial außen hinter diesen Wandungsteil greift.

5. Gurtaufroller nach einem der Ansprüche 1 bis 4, dadurch gekennzeichnet, daß die Hemmscheibe (32) an ihrem Außenumfang von einem Reibring (36) umfaßt wird, der drehfest am Rahmen (10) gehalten ist.

6. Gurtaufroller nach Anspruch 5, dadurch gekennzeichnet, daß der Reibring (36) seinerseits von einem Federring (38) umfaßt wird.

7. Gurtaufroller nach einem der Ansprüche 1 bis 6, dadurch gekennzeichnet, daß sich der Ansatz (24b) über einen Bereich erstreckt, der dem Drehwinkel entspricht.

8. Gurtaufroller für ein Insassen-Rückhaltesystem in Fahrzeugen, mit einer drehbar in einem Rahmen (10) gelagerten Gurtspule (12), an der eine Aufrollfeder angreift, einem Blockiermechanismus für die Gurtspule, der durch Verschwenken mindestens einer Ansteuerklinke (20a; 24) aktivierbar ist, und an der Gurtspule (12) gelagerten, relativ zu dieser verdrehbaren Sperrelementen (32, 34; 50, 62), wobei die Sperrelemente (32, 34; 50, 62) und die Ansteuerklinke (20a; 24) relativ zueinander durch Drehung der Gurtspule (12) in der Aufwickelrichtung eine erste Stellung, in der die Sperrelemente (32, 34; 50, 62) über ein Sperrteil (34; 62) an der Ansteuerklinke (20a; 24) angreifen und deren Verschwenken verhindern, und durch Drehung in der Abwickelrichtung eine zweite Stellung einnehmen können, in der die Sperrelemente (32, 34; 50, 62) die Ansteuerklinke (20a; 24) freigeben, bei welchem für den Übergang aus der ersten in die zweite Stellung eine Drehung der Gurtspule (12) um einen vorbestimmten Drehwinkel von mindestens etwa 10° notwendig ist,
dadurch gekennzeichnet,
daß die Ansteuerklinke (20a) schwenkbar an einem Trägheitssensor (20) gelagert ist und fahrzeugsensitiv in eine Außenverzahnung einer Steuerscheibe (16) eingesteuert werden kann, daß die Sperrelemente einen reibschlüssig mit der Gurtspule gekoppelten und um deren Achse begrenzt verschwenkbar gelagerten Sperrhebel (50) enthalten, der mit zwei kreisbogenförmigen Armen (46, 48) den Umfang eines kreisscheibenförmigen, drehfest an der Gurtspule (12) gelagerten Lagerteils (40) umgreift, daß die Arme (46, 48) durch eine sie umspannende metallische Ringfeder (54) in Reibungseingriff mit der Umfangsfläche des Lagerteils (40) gehalten sind und daß der Sperrhebel (50) mit einer kreisbogenförmigen Anlagefläche (62) versehen ist, die sich über einen Bereich erstreckt, der dem Drehwinkel entspricht, und die in der ersten Stellung an der Ansteuerklinke (20a) angreift und in der zweiten Stellung diese freigibt.

9. Gurtaufroller nach Anspruch 8, dadurch gekennzeichnet, daß der vorbestimmte Drehwinkel zwischen etwa 20° und etwa 25° beträgt.

10. Gurtaufroller nach Anspruch 8 oder 9, dadurch gekennzeichnet, daß das Lagerteil (40) eine Nut (44) an seinem Außenumfang aufweist, in welche die kreisbogenförmigen Arme (46, 48) eingreifen.

11. Gurtaufroller nach einem der Ansprüche 8 bis 10, dadurch gekennzeichnet, daß die kreisbogenförmigen Arme (46, 48) an ihrem Außenumfang eine Nut (52) aufweisen, in welcher die Ringfeder (54) gehalten ist.

12. Gurtaufroller nach einem der Ansprüche 1 bis 7, dadurch gekennzeichnet, daß die Sperrelemente ferner einen reibschlüssig mit der Gurtspule (12) gekoppelten und um deren Achse begrenzt verschwenkbar gelagerten Sperrhebel (50) enthalten, der mit einer kreisbogenförmigen Anlagefläche (62) versehen ist, die sich über einen Bereich erstreckt, der dem Drehwinkel entspricht, und die in der ersten Stellung an einer Ansteuerklinke (20a) eines Trägheitssensors (20) angreift und in der zweiten Stellung diese freigibt.

## Claims

1. A belt retractor for an occupant restraining system in vehicles, comprising a belt drum (12) rotatably mounted in a frame (10) and acted upon by a wind-up spring, a locking mechanism for the belt drum, which can be activated by pivoting at least one actuator pawl (20a; 24), and catch elements (32, 34; 50, 62) mounted on the belt drum (12) and able to rotate in relation to it, said catch elements (32, 34; 50, 62) and the actuator pawl (20a; 24) being able to assume, by rotation of the belt drum (12) in the wind-up direction, a first position in relation to each other in which the catch elements (32, 34; 50, 62) by means of a catch part (34; 62) engage the actuator pawl (20a; 24) and prevent pivoting thereof, and by rotation in the unwinding direction a second position in which the catch elements (32, 34; 50, 62) clear the actuator pawl (20a; 24), wherein, for the transition from the first into the second position, a rotation of the belt drum (12) through a predetermined angle of rotation of at least approximately 10° is necessary, characterized in that the locking mechanism of the belt drum can be activated by vehicle sensitive and/or webbing sensitive initiation, in that the actuator pawl (24) is pivotally mounted on one side of the belt drum (12) and may be brought into engagement with internal tooth means of an activating ring (30) rotatably mounted on the frame (10), by means of a control cam (28a) formed on a control disk (16) which is mounted on the belt drum (12) for limited turning motion, in that the actuator pawl (24) possesses a head (24b) and in that the catch elements comprise a brake disk (32) rotatably mounted on the belt drum (12), which brake disk (32) is retarded by friction between it and the frame (10) and possesses the catch part (34) which in the first position engages the head (24b) and in the second position releases same.

2. The belt retractor as claimed in claim 1, characterized in that the predetermined angle of rotation amounts to between approximately 20° and approximately 25°.

3. The belt retractor as claimed in claim 1 or claim 2, characterized in that the brake disk (32) is able to be entrained in rotation against a frictional force in relation to the frame (10) by the actuator pawl (24) riding against the catch part (34) on rotation of the belt drum (12), such frictional force being negligible as compared with the force of the wind-up spring.

4. The belt retractor as claimed in any one of claims 1 through 3, characterized in that the catch part (34) is constituted by a wall part extending perpendicularly from the brake disk (32) and on rotation of the belt drum (12) in the wind-up direction the head (24b) of the actuator pawl engages radially outwardly behind this wall part.

5. The belt retractor as claimed in any one of the claims 1 through 4, characterized in that the brake disk (32) has a friction ring (36) fitting about its outer periphery and being held non-rotatably on the frame (10).

6. The belt retractor as claimed in claim 5, characterized in that the frictional ring (36) is for its part encircled by a spring ring (38).

7. The belt retractor as claimed in any one of the claims 1 through 6, characterized in that the head (24b) extends for a range which corresponds to the angle of rotation.

8. A belt retractor for an occupant restraining system in vehicles, comprising a belt drum (12) rotatably mounted in a frame (10) and acted upon by a wind-up spring, a locking mechanism for the belt drum, which can be activated by pivoting at least one actuator pawl (20a; 24), and catch elements (32, 34; 50, 62) mounted on the belt drum (12) and able to rotate in relation to it, said catch elements (32, 34; 50, 62) and the actuator pawl (20a; 24) being able to assume, by rotation of the belt drum (12) in the wind-up direction, a first position in relation to each other in which the catch elements (32, 34; 50, 62) by means of a catch part (34; 62) engage the actuator pawl (20a; 24) and prevent pivoting thereof, and by rotation in the unwinding direction a second position in which the catch elements (32, 34; 50, 62) clear the actuator pawl (20a; 24), wherein, for the transition from the first into the second position, a rotation of the belt drum (12) through a predetermined angle of rotation of at least approximately 10° is necessary, characterized in that the actuator pawl (20a) is pivotally mounted on an inertial sensor (20) and in vehicle-sensitive manner may be brought into engagement with external tooth means on a control disk (16), in that the catch elements comprise a catch lever (50) coupled frictionally with the belt drum and able to pivot to a limited extent about the axis thereof, which catch lever has two circularly arcuate arms (46, 48) fitting about the periphery of a bearing part (40) which is non-rotatably mounted on the belt drum (12) and has the form of a circular disk, in that the arms (46, 48) are held in frictional engagement with the peripheral surface of the bearing part (40) by a metallic annular spring (54) encircling the arms and in that the catch lever (50) is provided with a circularly arcuate engagement surface (62), extending for a range corresponding to the angle of rotation and which in the first position comes into engagement with the actuator pawl (20a) and in the second position releases same.

9. The belt retractor as claimed in claim 8, characterized in that the predetermined angle of rotation amounts to between approximately 20° and approximately 25°.

10. The belt retractor as claimed in claim 8 or 9, characterized in that in its outer periphery the bearing part (40) possesses a groove (44) for the circularly arcuate arms (46, 48) to fit into.

11. The belt retractor as claimed in any one of the claims 8 through 10, characterized in that in their outer periphery the circularly arcuate arms (46, 48) possess a groove (52) in which the annular spring (54) is held.

12. The belt retractor as claimed in any one of the claims 1 through 7, characterized in that the catch elements furthermore comprise a catch lever (50) frictionally coupled with the belt drum and mounted for limited pivoting motion about the axis of the belt drum (12) and such catch lever being provided with a circularly arcuate engagement surface (62), extending for a range corresponding to the angle of rotation and which in the first position engages an actuator pawl (20a) of an inertial sensor (20) and in the second position releases same.

## Revendications

1. Enrouleur de ceinture de sécurité pour un système de retenue des occupants dans des véhicules, comprenant une bobine de ceinture (12) qui est montée en rotation dans un châssis (10) et sur laquelle agit un ressort d'enroulement, un mécanisme de blocage de la bobine de ceinture qui peut être actionné par le basculement d'au moins un cliquet de déclenchement (20a ; 24), et des éléments d'arrêt (32, 34 ; 50, 62) qui sont montés sur la bobine de ceinture (12) et peuvent tourner par rapport à celle-ci, les éléments d'arrêt (32, 34 ; 50, 62) et le cliquet de déclenchement (20a ; 24) pouvant adopter l'un par rapport à l'autre, par rotation de la bobine de ceinture (12) dans le sens d'enroulement, une première position où, par l'intermédiaire d'une pièce d'arrêt (34 ; 62), les éléments d'arrêt (32, 34 ; 50, 62) agissent sur le cliquet de déclenchement (20a ; 24) en l'empêchant de basculer et, par rotation dans le sens de déroulement, une seconde position où les éléments d'arrêt (32, 34 ; 50, 62) libèrent le cliquet de déclenchement (20a ; 24), dans lequel une rotation de la bobine de ceinture (12) selon un angle de rotation prédéterminé d'au moins environ 10° est nécessaire pour passer de la première à la seconde position, caractérisé en ce que le mécanisme de blocage de la bobine de ceinture peut être actionné en réponse au comportement du véhicule et/ou de la sangle de ceinture, en ce que le cliquet de déclenchement (24) est monté pivotant sur un côté de la bobine de ceinture (12) et peut être engagé dans une denture intérieure d'un anneau d'actionnement (30), monté en rotation contre le châssis (10), au moyen d'un ergot de commande (28a) disposé contre un disque de commande (16) qui est monté avec une possibilité de rotation limitée sur la bobine de ceinture (12), en ce que le cliquet de déclenchement (24) comporte un appendice (24b), et en ce que les éléments d'arrêt comportent un disque immobilisateur (32) qui est monté en rotation sur la bobine de ceinture (12), est freiné par frottement par rapport au châssis (10) et comporte la pièce d'arrêt (34) qui, dans la première position, agit sur l'appendice (24b) et, dans la seconde position, le libère.

2. Enrouleur de ceinture de sécurité selon la revendication 1, caractérisé en ce que l'angle de rotation prédéterminé est compris entre environ 20° et environ 25°.

3. Enrouleur de ceinture de sécurité selon la revendication 1 ou 2, caractérisé en ce que le disque immobilisateur (32) peut être entraîné à l'encontre d'une force de frottement par rapport au châssis (10) par mise en butée du cliquet de déclenchement (24) contre la pièce d'arrêt (34) lors de la rotation de la bobine de ceinture (12), ladite force de frottement étant négligeable par rapport à la force du ressort d'enroulement.

4. Enrouleur de ceinture de sécurité selon l'une des revendications 1 à 3, caractérisé en ce que la pièce d'arrêt (34) est formée par une partie de paroi en saillie perpendiculaire au disque immobilisateur (32) et, lors de la rotation de la bobine de ceinture (12) dans le sens d'enroulement, l'appendice (24b) du cliquet de déclenchement s'engage radialement à l'extérieur derrière ladite partie de paroi.

5. Enrouleur de ceinture de sécurité selon l'une des revendications 1 à 4, caractérisé en ce que, sur sa périphérie extérieure, le disque immobilisateur (32) est entouré par un anneau de friction (36) qui est maintenu sans possibilité de rotation contre le châssis (10).

6. Enrouleur de ceinture de sécurité selon la revendication 5, caractérisé en ce que, pour sa part, l'anneau de friction (36) est entouré par un anneau élastique (38).

7. Enrouleur de ceinture de sécurité selon l'une des revendications 1 à 6, caractérisé en ce que l'appendice (24b) s'étend sur une zone qui correspond à l'angle de rotation.

8. Enrouleur de ceinture de sécurité pour un système de retenue des occupants dans des véhicules, comprenant une bobine de ceinture (12) qui est montée en rotation dans un châssis (10) et sur laquelle agit un ressort d'enroulement, un mécanisme de blocage de la bobine de ceinture qui peut être actionné par le basculement d'au moins un cliquet de déclenchement (20a ; 24), et des éléments d'arrêt (32, 34 ; 50, 62) qui sont montés sur la bobine de ceinture (12) et peuvent tourner par rapport à celle-ci, les éléments d'arrêt (32, 34 ; 50, 62) et le cliquet de déclenchement (20a ; 24) pouvant adopter l'un par rapport à l'autre, par rotation de la bobine de ceinture (12) dans le sens d'enroulement, une première position où, par l'intermédiaire d'une pièce d'arrêt (34 ; 62), les éléments d'arrêt (32, 34 ; 50, 62) agissent sur le cliquet de déclenchement (20a ; 24) en l'empêchant de basculer et, par rotation dans le sens de déroulement, une seconde position où les éléments d'arrêt (32, 34 ; 50, 62) libèrent le cliquet de déclenchement (20a ; 24), dans lequel une rotation de la bobine de ceinture (12) selon un angle de rotation prédéterminé d'au moins environ 10° est nécessaire pour passer de la première à la seconde position, caractérisé en ce que le cliquet de déclenchement (20a) est monté pivotant sur un capteur inertiel (20) et peut, en réponse au comportement du véhicule, être engagé dans la denture extérieure d'un disque de commande (16), en ce que les éléments d'arrêt comportent un levier d'arrêt (50) qui est accouplé en formant une liaison par friction avec la bobine de ceinture et est monté avec une possibilité de rotation limitée autour de l'axe de celle-ci et qui, avec deux bras en arc de cercle (46, 48), entoure la périphérie d'une pièce d'appui (40) en forme de disque annulaire, solidarisée en rotation à la bobine de ceinture (12), en ce que les bras (46, 48) sont maintenus en prise par friction avec la surface périphérique de la pièce d'appui (40) au moyen d'un ressort métallique annulaire (54) qui les enserre, et en ce que le levier d'arrêt (50) est pourvu d'une surface d'appui en arc de cercle (62) qui s'étend sur une zone correspondant à l'angle de rotation et qui, dans la première position, agit sur le cliquet de déclenchement (20a) et, dans la seconde position, le libère.

9. Enrouleur de ceinture de sécurité selon la revendication 8, caractérisé en ce que l'angle de rotation prédéterminé est compris entre environ 20° et environ 25°.

10. Enrouleur de ceinture de sécurité selon la revendication 8 ou 9, caractérisé en ce que, sur sa périphérie extérieure, la pièce d'appui (40) comporte une gorge (44), dans laquelle s'engagent les bras en arc de cercle (46, 48).

11. Enrouleur de ceinture de sécurité selon l'une des revendications 8 à 10, caractérisé en ce que, sur leur périphérie extérieure, les bras en arc de cercle (46, 48) comportent une gorge (52) dans laquelle est logé le ressort annulaire (54).

12. Enrouleur de ceinture de sécurité selon l'une des revendications 1 à 7, caractérisé en ce que les éléments d'arrêt comportent également un levier d'arrêt (50) qui est accouplé en formant une liaison par friction avec la bobine de ceinture (12) et est monté avec une possibilité de rotation limitée autour de l'axe de celle-ci et qui est pourvu d'une surface d'appui en arc de cercle (62) qui s'étend sur une zone correspondant à l'angle de rotation et qui, dans la première position, agit sur un cliquet de déclenchement (20a) d'un capteur inertiel (20) et, dans la seconde position, le libère.
